(19) Europäisches Patentamt / European Patent Office / Office européen des brevets

(11) **EP 3 965 121 B1**

(12) **EUROPEAN PATENT SPECIFICATION**

(45) Date of publication and mention
of the grant of the patent:
**17.06.2026 Bulletin 2026/25**

(21) Application number: **20798619.1**

(22) Date of filing: **29.04.2020**

(51) International Patent Classification (IPC):
**G21C 17/104** (2006.01)   **G21C 17/108** (2006.01)
**G21D 3/00** (2006.01)

(52) Cooperative Patent Classification (CPC):
**G21C 17/104; G21D 3/001;** G21C 17/108;
Y02E 30/00; Y02E 30/30

(86) International application number:
**PCT/CN2020/087752**

(87) International publication number:
**WO 2020/221290 (05.11.2020 Gazette 2020/45)**

(54) **METHOD AND DEVICE FOR MEASURING CONTROL ROD WORTH IN SUBCRITICAL STATE OF NUCLEAR POWER PLANT**

VERFAHREN UND VORRICHTUNG ZUR MESSUNG DES REGELSTABES IM UNTERKRITISCHEN ZUSTAND EINES KERNKRAFTWERKS

PROCÉDÉ ET DISPOSITIF DE MESURE D'UNE VALEUR DE BARRE DE COMMANDE DE CENTRALE NUCLÉAIRE DANS UN ÉTAT SOUS-CRITIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2019 CN 201910352853**

(43) Date of publication of application:
**09.03.2022 Bulletin 2022/10**

(73) Proprietors:
• **Ling Ao Nuclear Power Co., Ltd.**
  **Shenzhen, Guangdong 518000 (CN)**
• **Guangdong Nuclear Power Joint Venture Co., Ltd.**
  **Shenzhen, Guangdong 518000 (CN)**
• **Ling Dong Nuclear Power Co., Ltd**
  **Shenzhen, Guangdong 518000 (CN)**
• **Daya Bay Nuclear Power Operations and Management Co., Ltd.**
  **Shenzhen, Guangdong 518000 (CN)**
• **China General Nuclear Power Corporation**
  **Shenzhen, Guangdong 518000 (CN)**

• **China Guangdong Nuclear Power Co., Ltd.**
  **Futian District**
  **Shenzhen, Guangdong 518000 (CN)**

(72) Inventor: **TAN, Shijie**
**Shenzhen, Guangdong 518000 (CN)**

(74) Representative: **KIPA AB**
**Drottninggatan 11**
**252 21 Helsingborg (SE)**

(56) References cited:
CN-A- 105 895 174      CN-A- 106 531 254
CN-A- 108 492 898      CN-A- 108 492 898
CN-A- 109 273 119      CN-A- 110 010 256
JP-A- 2015 148 524

• ANSARI S A ET AL: "DEVELOPMENT OF A PERSONAL-COMPUTER-BASED SYSTEM FOR CONTROL ROD WORTH DETERMINATION IN A NUCLEAR REACTOR", IEEE TRANSACTIONS ON NUCLEAR SCIENCE, IEEE, USA, vol. 37, no. 6, 1 December 1990 (1990-12-01), pages 2149 - 2155, XP000177740, ISSN: 0018-9499, DOI: 10.1109/TNS.1990.574204

## Description

### TECHNICAL FIELD

The present application relates to the field of rod control systems for mega-kilowatt nuclear power plants, and more particularly to a method and a device for measuring control rod worth in a nuclear power plant under a sub-critical state.

### BACKGROUND

Startup physics tests are comprehensive and direct inspections for pressurized water reactor core design, among which the measurement of control rod worth is one of the longest and most important items. The test method is developing towards the direction of shorter time and faster operation as the accuracy of reactor numerical calculation increases.

After reaching the critical point, a power detector of the reactor is required for the measurement of control rod worth. However, this power detector also has a function of safety protection. Therefore, when the power detector is occupied, the protection of the power detector to the reactor will be weakened.

CN108492898A relates to a method and a device for measuring control rod worth for a million kilowatt nuclear power plant which is capable of improving the safety of the measurement process. The method includes steps of: acquiring a front moving rod counting rate corresponding to a detector of a reactor in a first critical state, acquiring an after moving rod counting rate of the detector in a secondary critical state; acquiring a refueling mode of the reactor, and acquiring a corresponding target coordinate system according to the refueling mode; determining, according to the front moving rod counting rate and the first value curve, a front moving rod growth factor corresponding to the number of neutrons in the reactor; and determining, according to the after moving rod counting rate and the second value curve, an after moving rod growth factor corresponding to the number of neutrons in the reactor; and calculating the control rod value according to the front moving rod growth factor and the after moving rod growth factor.

XP177740A discloses a system based on a personal computer for on-line determination of control rod worth in the upgraded 10-MW core of the Pakistan Research Reactor (PARR-1)

### TECHNICAL PROBLEM

One of objects of embodiments of the present application is to provide a method and a device for measuring control rod worth in a nuclear power plant under a sub-critical state, which aims to solve technical problems of shortening occupation time of critical path when measuring the control rod worth in other projects, such as in critical rod lift operations or rod drop tests, meanwhile achieving the measurement of control rod worth without occupying the power detector.

### TECHNICAL SOLUTIONS

In order to solve the above technical problems, technical solutions adopted in the embodiments of the present application are provided as follows:

In accordance with a first aspect of the embodiments of the present application, it is provided a method for measuring control rod worth in a nuclear power plant under a sub-critical state, which includes the following steps of:

acquiring a response value of a first neutron detector of a nuclear reactor in an initial state;

acquiring a response value of a second neutron detector of the nuclear reactor in the sub-critical state; and

determining the control rod worth according to the response value of the first neutron detector and the response value of the second neutron detector, where the step of determining the control rod worth according to the response value of the first neutron detector and the response value of the second neutron detector includes:

measuring a boron concentration of a primary loop in the initial state, and determining an effective value-added coefficient in the initial state according to the boron concentration of the primary loop;

acquiring an effective value-added coefficient in the sub-critical state according to the response value of the first neutron detector, the response value of the second neutron detector and the effective value-added coefficient in the initial state; and

determining the control rod worth according to the effective value-added coefficient in the initial state and the effective value-added coefficient in the sub-critical state.

In one of the embodiments, the step of acquiring an effective value-added coefficient in the sub-critical state according to the response value of the first neutron detector, the response value of the second neutron detector and the effective value-added coefficient in the initial state includes:

calculating the effective value-added coefficient in the sub-critical state according to a formula

$$\frac{Mb}{Ma} = \frac{Gb}{Ga}\frac{1 - K_{effb}}{1 - K_{effa}};$$

where,

$$M = \varepsilon G \frac{S_0}{1 - K_{eff}} = \varepsilon G1 G2 \frac{S_0}{1 - K_{eff}};$$

and

Ma denotes the response value of the first neutron detector, Mb denotes the response value of the second neutron detector, $\varepsilon$ denotes a neutron detection efficiency, $S_0$ denotes an intensity of the external neutron source, $K_{effa}$ denotes the effective value-added coefficient in the initial state, and $K_{effb}$ denotes the effective value-added coefficient in the sub-critical state, G1 is a spatial correction factor, and G2 is a detector response correction factor.

In one of the embodiments, the step of determining the control rod worth according to the effective value-added coefficient in the initial state and the effective value-added coefficient in the sub-critical state includes:

calculating the control rod worth according to a formula $\rho = \ln \frac{K_{effb}}{K_{effa}}$;

where, $\rho$ is the control rod worth.

In one of the embodiments, the above-mentioned spatial correction factor is a relational expression including a normalized external neutron source distribution function, a conjugate function, a neutron density distribution function, a reactor neutron generation operator, and a neutron velocity. In which, the above conjugate function is a conjugate function of the neutron flux density function.
The above-mentioned detector response correction factor is a relational expression including a weight coefficient, the neutron density distribution function, and the neutron velocity.

In one of the embodiments, the spatial correction factor is: $G1 = \frac{<\psi, \ \xi>}{<\psi, \ Fv\varphi>}$, and the detector response correction factor is: $G2 = <w, v\varphi>$;

where, $\xi$ denotes the normalized external neutron source distribution function, $\Psi$ denotes the conjugate function, $\varphi$ denotes the neutron density distribution function, F denotes the reactor neutron generation operator, v denotes the neutron velocity; w denotes the weight coefficient, and $<\ >$ represents an integral of space energy.
In one of the embodiments, before the step of acquiring the response value of the second neutron detector of the nuclear reactor in the sub-critical state, the method further includes a step of:
changing a relative position between a control rod and a core of the nuclear reactor to achieve the sub-critical state.
In one of the embodiments, the step of changing a relative position between a control rod and a core of the nuclear reactor also includes a step of:

controlling the control rod to drop into the core; or

alternatively, controlling the control rod to be lifted to a top of the core;

where, the control rod includes at least one of a safety control rod, a power control rod, and a temperature control rod.

In accordance with a second aspect of the embodiments of the present application, it is provided a device for measuring control rod worth in a nuclear power plant under a sub-critical state, which includes:

a first neutron detector response value acquisition module, which is capable of acquiring a response value of a first neutron detector of a nuclear reactor in an initial state;

a second neutron detector response value acquisition module, which is capable of acquiring a response value of a second neutron detector of the nuclear reactor in the sub-critical state; and

a control rod worth determination module, which is configured to determine the control rod worth according to the response value of the first neutron detector and the response value of the second neutron detector, where the control rod worth determination module includes:

a first effective value-added coefficient sub-module, which is configured to measure a boron concentration of a primary loop in the initial state, and determine an effective value-added coefficient in the initial state according to the boron concentration of the primary loop;

a second effective value-added coefficient sub-module, which is configured to acquire an effective value-added coefficient in the sub-critical state according to the response value of the first neutron detector, the response value of the second neutron detector and the effective value-added coefficient in the initial state; and

a control rod worth determination sub-module, which is configured to determine the control rod worth according to the effective value-added coefficient in the initial state and the effective value-added coefficient in the sub-critical state.

In one of the embodiments, the second effective value-added coefficient sub-module is specifically configured to calculate the effective value-added coefficient in the sub-critical state according to a formula $\dfrac{Mb}{Ma} = \dfrac{Gb}{Ga}\dfrac{1 - K_{effb}}{1 - K_{effa}}$ ;

where,

$$M = \varepsilon G \frac{S_0}{1 - K_{eff}} = \varepsilon G1 G2 \frac{S_0}{1 - K_{eff}} ;$$

Ma denotes the response value of the first neutron detector, Mb denotes the response value of the second neutron detector, $\varepsilon$ denotes a neutron detection efficiency, $S_0$ denotes an intensity of the external neutron source, $K_{effa}$ denotes the effective value-added coefficient in the initial state, and $K_{effb}$ denotes the effective value-added coefficient in the sub-critical state, G1 is a spatial correction factor, and G2 is a detector response correction factor.

In one of the embodiments, the control rod worth determination sub-module is specifically configured to calculate the control rod worth according to a formula $\rho = \ln \dfrac{K_{effb}}{K_{effa}}$ :

where $\rho$ is the control rod worth.

In one of the embodiments, the above-mentioned spatial correction factor is a relational expression including a normalized external neutron source distribution function, a conjugate function, a neutron density distribution function, a reactor neutron generation operator, and a neutron velocity. In which, the above conjugate function is a conjugate function of the neutron flux density function.

The above-mentioned detector response correction factor is a relational expression including a weight coefficient, the neutron density distribution function, and the neutron velocity.

In one of the embodiments, the above-mentioned spatial correction factor is: $G1 = \dfrac{<\psi, \ \xi>}{<\psi, \ Fv\varphi>}$ , and the above-mentioned detector response correction factor is: G2 =< w, v$\varphi$ > ;

where, $\xi$ denotes the normalized external neutron source distribution function, $\Psi$ denotes the conjugate function, $\varphi$ denotes the neutron density distribution function, F denotes the reactor neutron generation operator, v denotes the neutron velocity; w denotes the weight coefficient, and < > represents an integral of space energy.

In one of the embodiments, the device also includes a control rod position change module, which is configured to change a relative position between a control rod and a core of the nuclear reactor to achieve the sub-critical state before the response value of the second neutron detector of the nuclear reactor in the sub-critical state is acquired.

In one of the embodiments, the above-mentioned control rod position change module is specifically configured to control the control rod to drop into the core; or alternatively, to be lifted to a top of the core. In which, the control rod includes at least one of a safety control rod, a power control rod, and a temperature control rod.

In accordance with a third aspect of the embodiments of the present application, it is provided a computer device, including a memory and a processor, the memory stores a computer program, and the processor, when executing the computer program, is configured to implement the following steps:

acquiring a response value of a first neutron detector of a nuclear reactor in an initial state;

acquiring a response value of a second neutron detector of the nuclear reactor in the sub-critical state; and

determining the control rod worth according to the response value of the first neutron detector and the response value of the second neutron detector.

**In** accordance with a fourth aspect of the embodiments of the present application, it is provided a computer-readable storage medium on which a computer program is stored, and when the computer program is executed by a processor, the following steps are implemented:

acquiring a response value of a first neutron detector of a nuclear reactor in an initial state;

acquiring a response value of a second neutron detector of the nuclear reactor in the sub-critical state; and

determining the control rod worth according to the response value of the first neutron detector and the response value of the second neutron detector.

## BENEFICIAL EFFECTS

The embodiments of the present application have beneficial effects in that: through the method and device for measuring control rod worth in a nuclear power plant under a sub-critical state provided by the embodiments of the present application, the response value of the first neutron detector of the nuclear reactor in the initial state is acquired; the response value of the second neutron detector of the nuclear reactor in the sub-critical state is acquired; and according to the response value of the first neutron detector and the response value of the second neutron detector, the control rod worth is determined. In accordance with the embodiments of the present application, the control rod worth is determined according to the acquired response values of the first neutron detector and the second neutron detector. Since the response value of the second neutron detector in the sub-critical state can be acquired without occupying the power detector, that is, the power detector can still perform the function of protecting the nuclear reactor, so that the safety of the nuclear reactor can be improved.

## BRIEF DESCRIPTION OF DRAWINGS

In order to illustrate the technical solutions in the embodiments of the present application more clearly, the following will briefly introduce the drawings that need to be used in the embodiments or exemplary technical descriptions. Obviously, the drawings in the following description are only some embodiments of the present application. For those of ordinary skill in the art other drawings can also be obtained based on these drawings without paying creative work.

FIG. 1 is an application environment diagram of a method for measuring control rod worth in a nuclear power plant under a sub-critical state according to an embodiment of the present application;

FIG. 2 is a schematic flowchart of the method for measuring the control rod worth in the nuclear power plant under the sub-critical state according to an embodiment of the present application;

FIG. 3 is a schematic flowchart of the steps of determining the control rod worth according to an embodiment of the present application; and

FIG. 4 is a structural block diagram of a device for measuring control rod worth in a nuclear power plant under a sub-critical state according to an embodiment of the present application.

## DETAILED DESCRIPTION

In order to make the purpose, technical solutions, and advantages of the present application more comprehensible, the following further describes the present application in detail with reference to the drawings and embodiments. It should be understood that specific embodiments described herein are intended only to explain the present invention, and are not intended to limit the present application.

It should be noted that when a component is referred to as being "fixed to" or "disposed on" another component, it can be directly or indirectly on the other component. When a component is referred to as being "connected" to another component, it can be directly or indirectly connected to the other component. The orientation or positional relationship indicated by terms "upper", "lower", "left", "right", etc. are based on the orientation or positional relationship shown in the drawings, which are merely used for ease of description, and do not indicate or imply the device or the element referred to must have a specific orientation, be constructed and operated in a specific orientation, and therefore cannot be understood as a limitation of the present application. For those of ordinary skill in the art, the specific meaning of the above terms can be understood according to specific conditions. The terms "first" and "second" are used only for ease of description, and cannot be understood as indicating or implying relative importance or implicitly indicating the number of technical features. The term of "a/the plurality of" means two or more than two, unless otherwise specifically defined.

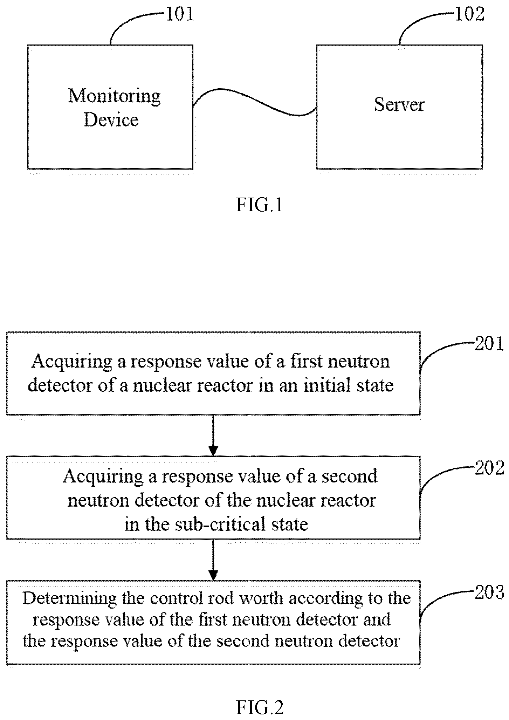

Methods for measuring control rod worth in a nuclear power plant under a sub-critical state provided by the present application can be applied to the application environment as shown in FIG. 1. Among them, a monitoring device 101 and a server 102 can communicate through a network. The monitoring device monitors various parameters of a nuclear reactor, for example, a response value of the neutron detector can be measured. The server 102 may be implemented as an independent server or a server cluster composed of multiple servers.

In accordance with an embodiment, as shown in FIG. 2, it is provided a method for measuring control rod worth in a nuclear power plant under a sub-critical state. Taking the method applied to the server in FIG. 1 as an example for description, the method includes the following steps of 201, 202 and 203.

In step 201, a response value of a first neutron detector of a nuclear reactor in an initial state is acquired.

In this embodiment, a state before a startup physical experiment of the nuclear reactor can be determined as the initial state. For example, in the initial state, a pressurized water reactor is in a normal shutdown mode of a steam generator SG cooling, three main pumps are all in operation, and temperature of a reactor coolant system RCP is 291.4°C and a pressure value is 155 bar. The embodiments of the present application do not limit the initial state in detail, which can be set according to actual conditions.

In the initial state, a total number of neutrons in the reactor is detected by the monitoring device such as a neutron detector, and the server can acquire the total number of neutrons in the reactor from the monitoring device at this time, that is, the response value of the first neutron detector is acquired.

In step 202, a response value of a second neutron detector of the nuclear reactor in the sub-critical state is acquired.

In this embodiment, after the startup physical experiment, the nuclear reactor is brought to the sub-critical state, and then the total number of neutrons in the sub-critical state is detected by the monitoring device. Then, the server acquires the total number of neutrons in the reactor from the monitoring device at this time, that is, the response value of the second neutron detector is acquired.

Specifically, after the startup physical experiment, the nuclear reactor can be brought to the sub-critical state, and moving rod operations can be performed, such as a rod drop or a rod lift operation. The response value of the second neutron detector is acquired during the moving rod operations. Since the criticality is not reached at this time, the power range of the power detector has not yet begun to measure, so that the power detector will not be occupied and can still perform a function of safety protection to the nuclear reactor, thereby improving the safety of nuclear reactor.

In step 203, the control rod worth is determined according to the response value of the first neutron detector and the response value of the second neutron detector.

In this embodiment, after the response value of the first neutron detector and the response value of the second neutron detector are acquired, the reactivity from the initial state to the sub-critical state caused by the control rod can be determined according to the response value of the first neutron detector and the response value of the second neutron detector, such that the control rod worth is determined.

In the above measurement method of control rod, the response value of the first neutron detector of the nuclear reactor in the initial state is acquired; the response value of the second neutron detector of the nuclear reactor in the sub-critical state is acquired; and according to the response value of the first neutron detector and the response value of the second neutron detector, the control rod worth is determined. In accordance with the embodiments of the present application, the control rod worth is determined according to the acquired response value of the first neutron detector and the acquired response value of the second neutron detector. Since the response value of the second neutron detector in the sub-critical state can be acquired without occupying the power detector, that is, the power detector can still perform the function of protecting the nuclear reactor, so that the safety of the nuclear reactor can be improved.

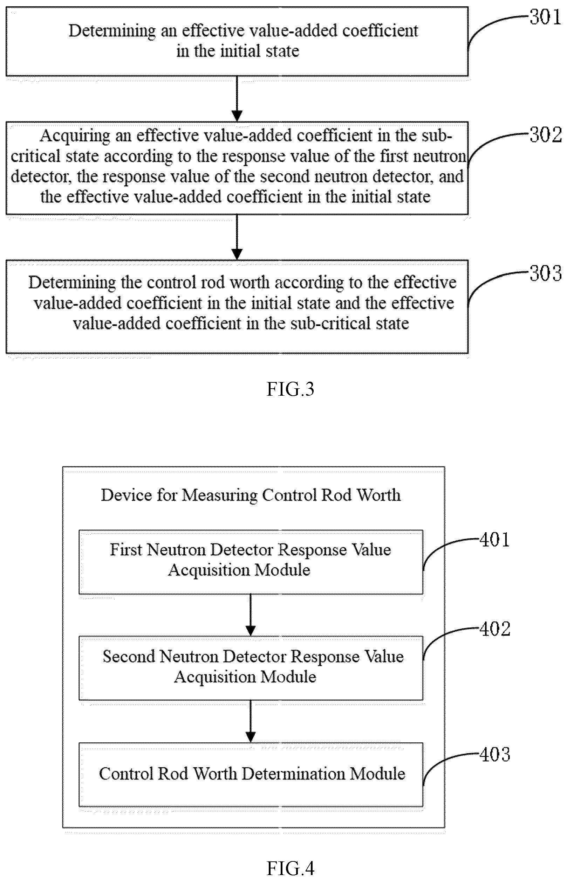

In another embodiment, as shown in FIG. 3, this embodiment relates to an optional process of determining the control rod worth according to the response value of the first neutron detector and the response value of the second neutron detector. On the basis of the above embodiment shown in FIG. 2, the step 203 may specifically include the following steps of 301, 302 and 303.

In step 301, an effective value-added coefficient in the initial state is determined.

In this embodiment, a boron concentration of a primary loop can be measured in the initial state, and then the effective value-added coefficient in the initial state can be calculated according to the boron concentration of the primary loop.

In step 302, an effective value-added coefficient in the sub-critical state is acquired according to the response value of the first neutron detector, the response value of the second neutron detector and the effective value-added coefficient in the initial state.

In this embodiment, after the effective value-added coefficient in the initial state is calculated according to the response value of the first neutron detector and the response value of the second neutron detector, the effective value-added coefficient in the sub-critical state can be acquired according to the following steps of:
calculating an effective value-added coefficient of the critical state according to formula (1);

$$\frac{Mb}{Ma} = \frac{Gb}{Ga}\frac{1-K_{effb}}{1-K_{effa}} \qquad \text{Formula (1),}$$

In which,

$$M = \varepsilon G\frac{S_0}{1-K_{eff}} = \varepsilon G1 G2 \frac{S_0}{1-K_{eff}} \qquad \text{formula (2);}$$

Ma denotes the response value of the first neutron detector, Mb denotes the response value of the second neutron detector, $\varepsilon$ denotes a neutron detection efficiency, $S_0$ denotes an intensity of an external neutron source, and $K_{effa}$ denotes the effective value-added coefficient in the initial state, $K_{effb}$ denotes the effective value-added coefficient in the sub-critical state, G1 denotes a spatial correction factor, and G2 denotes a detector response correction factor.

The specific process of obtaining formula (1) according to formula (2) includes:

$$Ma = \varepsilon Ga\frac{S_0}{1-K_{effa}}, \quad Mb = \varepsilon Gb\frac{S_0}{1-K_{effb}}$$ , thus formula (1) can be obtained by calculating a ratio of Mb to Ma. Since the response value of the first neutron detector Ma, the response value of the second neutron detector Mb, and the effective value-added coefficient in the initial state $K_{effa}$ are known values, thus the effective value-added coefficient in the sub-critical state $K_{effb}$ can be acquired by calculating the spatial correction factor G1 and the detector response correction factor G2.

In this embodiment, the spatial correction factor G1 and the detector response correction factor G2 can be calculated by the following derivations:
In a case that an external neutron source is provided, the neutron transport equation can be expressed as:

$$\frac{1}{v}\frac{\partial \Phi}{\partial t} = F\Phi - L\Phi + S \qquad \text{Formula (3)}$$

where, F denotes a reactor neutron generation operator, L denotes a reactor neutron loss operator, $\Phi$ denotes a neutron flux density function, S denotes an intensity of the external neutron source, and $S = S_0\xi(r, E, \Omega)$, $\xi$ denotes a normalized external neutron source distribution function. According to the definition of neutron flux density, it can be obtained that
$\Phi(r, E, t) = v(E)n(r, E, t)$ , where, v denotes a neutron velocity, E denotes energy, and t denotes time.

Assuming that an appropriate neutron density distribution function $\varphi(r, E, t)$ can be selected, so that $n(r, E, t) = n(t)\varphi(r, E, t)$, then it can be obtained that $\Phi(r, E, t) = v(E)n(t)\varphi(r, E, t)$ . Under sub-critical steady-state conditions, a spatial distribution of neutron density is independent of amplitude, so it is physically feasible.
a function $\psi(r, E)$ is provided such that

$$\int_V \int_0^\infty \psi(r,E)\varphi(r,E,t)dEdV = K_0 \qquad \text{Formula (4)}$$

Multiplying the formula (3) and $\psi(r, E)$ that satisfies formula (4) and performing an integral of space energy, then the left side of formula (3) can be modified as follows:

$$\int_V \int_0^\infty \frac{\psi(r,E)}{v(E)} \frac{\partial \, \Phi(r,E,t)}{\partial \, t} \, dEdV$$

$$= \int_V \int_0^\infty \frac{\psi(r,E)}{v(E)} \frac{\partial \, v(E)n(t)\varphi(r,E,t)}{\partial \, t} \, dEdV$$

$$= \frac{\partial \, n(t)}{\partial \, t} \int_V \int_0^\infty \psi(r,E)\varphi(r,E,t) \, dEdV + n(t)\frac{\partial}{\partial \, t} \int_V \int_0^\infty \psi(r,E)\varphi(r,E,t) \, dEdV$$

$$= K_0 \frac{\partial \, n(t)}{\partial \, t}$$

The above function $\psi$ that makes the formula (4) possible is a conjugate function of the neutron flux density function. The conjugate function represents the relative worth of introducing neutrons into the system or eliminating any local changes of neutrons from the system at point r. It is a measure of the importance of this point's influence on reactivity, and is also called a weight function.

The right side of formula (3) is modified as follows:
$n(t)[<\psi, Fv\varphi> - <\psi, Lv\varphi>] + <\psi, S>$, as used herein or below, $<>$ represents an integral of space energy. Then the neutron transport equation (3) is transformed into

$$K_0 \frac{\partial \, n(t)}{\partial \, t} = n(t)[<\psi, Fv\varphi> - <\psi, Lv\varphi>] + <\psi, S> \qquad (5),$$

The reactor neutron generation operator F is set as F = (F-Fd)+Fd, where Fd denotes a delayed neutron generation operator, and has definitions as follows:

$$\rho(t) = \frac{<\psi, Fv\varphi> - <\psi, Lv\varphi>}{<\psi, Fv\varphi>},$$

$$\Lambda(t) = \frac{K}{<\psi, Fv\varphi>},$$

$$\beta(t) = \frac{<\psi, F_d v\varphi>}{<\psi, Fv\varphi>},$$

$$\hat{S} = \frac{\int_V \int_0^\infty \psi S dVE}{\int_V \int_0^\infty \psi F\varphi dVE} \frac{<\psi, \ S>}{<\psi, \ Fv\varphi>},$$

$$\lambda i \, Ci = \frac{\beta i}{\Lambda(t)} n(t)$$

Where, i=1...6, according to the above formula, the neutron kinetic equation in the case that the external neutron source is provided can be acquired:

$$\frac{dn(t)}{dt} = \frac{\rho(t) - \beta(t)}{\Lambda(t)} n(t) + \sum \lambda i Ci + \frac{1}{\Lambda} \hat{S} \qquad \text{Formula (6)}$$

$$\frac{dCi}{dt} = \frac{\beta i}{\Lambda(t)} n(t) - \lambda i Ci$$

Set $\frac{dn(t)}{dt} = 0$, $\frac{dCi}{dt} = 0$, then a steady-state dynamics equation in the case that the external neutron source is provided can be acquired:

$$n = \frac{\hat{S}}{-\rho} \qquad \text{Formula (7)}$$

In the process from sub-critical startup to critical, the value change is generally small. $K_{eff}$ can be regarded as a non-time-sensitive function, and can be approximated as $K_{eff} \approx 1$; while $K_{eff}-1$ is a time-sensitive function, so it is often possible that $\rho \approx K_{eff} - 1$. Therefore, the formula (7) can be transformed into: $n = \frac{\hat{S}}{1 - K_{eff}}$.

The response value of the neutron detector can be expressed as an integral value weighted by the flux at each position of the core. The flux at different positions has different weighting effects:

$$M = \varepsilon \int_V \int_0^\infty w(r) \Phi(r, E, t) dV dE$$

$$= \varepsilon \int_V \int_0^\infty w(r) v(E) n(t) \varphi(r, E, t) dV dE$$

$$= \varepsilon n(t) < w, v\varphi > \qquad \text{Formula (8)}$$

Substituting formula (7) into formula (8), it can be obtained that:

$$M = \varepsilon \frac{\hat{S}}{-\rho} < w, v\varphi > = \varepsilon \frac{< \psi, \xi > < w, v\varphi >}{< \psi, Fv\varphi >} \frac{S_0}{-\rho} \qquad \text{Formula (9)}$$

In which, $\frac{< \psi, \xi > < w, v\varphi >}{< \psi, Fv\varphi >} = G = G1 G2$.

The spatial correction factor G1 is a relational expression including the normalized external neutron source distribution function, the conjugate function, the neutron density distribution function, the reactor neutron generation operator, and the neutron velocity. Specifically, the spatial correction factor $G1 = \frac{< \psi, \ \xi >}{< \psi, \ Fv\varphi >}$. The detector response correction factor G2 is a relational expression including the weight coefficient, the neutron density distribution function, and the neutron velocity. Specifically, the detector response correction factor $G2 = < w, v\varphi >$. In which, $\xi$ denotes the normalized external neutron source distribution function, $\Psi$ denotes the conjugate function, $\varphi$ denotes the neutron density distribution function, F denotes the reactor neutron generation operator, and v denotes the neutron velocity; w denotes the weight coefficient, and <> represents the integral of space energy.

Furthermore, a solving algorithm of G1 is more complicated, and G1 can be derived from the measured data of the experiment. Based on the acquired experimental data of multiple cycles, it can be known that when different loads are regarded as disturbances of $\varphi$ in the same fuel management mode, there is an approximate G1. At this time, the G1 of the previous cycle can also be acquired by the following formula based on the measured M and $K_{eff}$:

$$\varepsilon G l S_0 = \frac{M(1 - K_{eff})}{G2} \qquad \text{Formula (10)}$$

After correcting the G1 of the previous cycle according to the calculated G1, a correction value is acquired, and then the G1 of the current cycle can be corrected according to the correction value, so as to solve the decoupling problem in the process of solving G1.

The above formula (2) modifies a point-reactor value-added formula for spatial effects, which can make the subsequent calculation of the control rod worth more in line with the actual situation and more accurate.

In step 303, the control rod worth is determined according to the effective value-added coefficient in the initial state and the effective value-added coefficient in the sub-critical state.

In this embodiment, after the effective value-added coefficient in the initial state and the effective value-added coefficient in the sub-critical state are acquired, the control rod worth can be calculated according to a formula:

$$\rho = \ln \frac{K_{effb}}{K_{effa}} \quad \text{, where } \rho \text{ is the control rod worth.}$$

In the above embodiment, the effective value-added coefficient in the initial state is determined. The effective value-added coefficient in the sub-critical state is acquired according to the response value of the first neutron detector, the response value of the second neutron detector and the effective value-added coefficient in the initial state. The control rod worth is determined according to the effective value-added coefficient in the initial state and the effective value-added coefficient in the sub-critical state. In accordance with the embodiments of the present application, the point-reactor value-added formula is spatially modified, so that the point-reactor value-added formula is more in line with the actual situation, and the calculated effective value-added coefficient in the sub-critical state is more accurate, thereby making the calculated control rod worth more accurate.

In another embodiment, this embodiment relates to an optional process of determining the control rod worth. On the basis of the above embodiment shown in FIG. 2, before step 202, the method also includes a step of changing a relative position between a control rod and a core of the nuclear reactor to achieve the sub-critical state.

In this embodiment, after the startup physical experiment, the control rod can be controlled to drop into the core; or alternatively the control rod can be controlled to be lifted to a top of the core. In which, the control rod includes at least one of a safety control rod, a power control rod, and a temperature control rod.

In an example, the safety control rod, power control rod, and temperature control rod are all in the initial state outside the core. It is possible to drop the safety control rod into the core to achieve the sub-critical state, and calculate the control rod worth of the power control rod according to the embodiment shown in FIG. 2. It is also possible to drop the power control rod into the core to achieve the sub-critical state, and calculate the control rod worth of the power control rod according to the embodiment shown in FIG. 2. It is also possible to drop the temperature control rod into the core to achieve the sub-critical state, and calculate the control rod worth of the temperature control rod according to the embodiment shown in FIG. 2.

In another example, the safety control rod, power control rod, and temperature control rod are all in the initial state inside the core. The safety control rod being lifted to the top of the core is a first critical state, then the power control rod being lifted to the top of the core is a second critical state, and finally, the temperature control rod being lifted to the top of the core is a third critical state. It is possible to calculate the control rod worth of the safety control rod based on the initial state and the first critical state. It is also possible to calculate the control rod worth of the power control rod based on the initial state and the second critical state. It is also possible to calculate the control rod worth of the temperature control rod based on the initial state and the third critical state.

The embodiments of the present application are not limited to the foregoing calculation methods, which can be set according to actual conditions.

The above process of changing the relative position between the control rod and the core of the nuclear reactor to achieve the sub-critical state utilizes the moving rod operations in the critical process. During the operations of moving rods, the response value of the second neutron detector in the sub-critical state is acquired to determine the control rod worth, which saves the time for carving the rod.

It should be understood that although various steps in the flowcharts of FIGS. 2-3 are displayed in sequence as indicated by the arrows, these steps are not necessarily executed in the order indicated by the arrows. Unless otherwise specified in the present disclosure, there is no strict order for the execution of these steps, and these steps can be executed in other orders. Moreover, at least some of the steps in FIGS. 2-3 may include multiple sub-steps or multiple stages. These sub-steps or stages are not necessarily executed at the same time, which can be executed at different times. The execution order of these sub-steps or stages is not necessarily performed sequentially, but may be performed alternately or in turn with other steps or at least a part of sub-steps or stages of other steps.

In accordance with an embodiment, as shown in FIG. 4, it is provided a device for measuring control rod worth in a nuclear power plant under a sub-critical state, and the device includes a first neutron detector response value acquisition module 401, a second neutron detector response value acquisition module 402, and a control rod worth determination module 403.

The first neutron detector response value acquisition module 401 is configured to acquire a response value of a first neutron detector of a nuclear reactor in an initial state.

The second neutron detector response value acquisition module 402 is configured to acquire a response value of a second neutron detector of the nuclear reactor in the sub-critical state.

The control rod worth determination module 403 is configured to determine the control rod worth according to the response value of the first neutron detector and the response value of the second neutron detector.

In one of the embodiments, the aforementioned control rod worth determination module includes a first effective value-added coefficient sub-module, a second effective value-added coefficient sub-module, and a control rod worth determination sub-module.

The first effective value-added coefficient sub-module is configured to determine an effective value-added coefficient in the initial state.

The second effective value-added coefficient sub-module is configured to acquire an effective value-added coefficient in the sub-critical state according to the response value of the first neutron detector, the response value of the second neutron detector, and the effective value-added coefficient in the initial state.

The control rod worth determination sub-module is configured to determine the control rod worth according to the effective value-added coefficient in the initial state and the effective value-added coefficient in the sub-critical state.

In one of the embodiments, the aforementioned second effective value-added coefficient sub-module is specifically configured to calculate the effective value-added coefficient in the sub-critical state according to the formula

$$\frac{Mb}{Ma} = \frac{Gb}{Ga}\frac{1-K_{effb}}{1-K_{effa}} \; ;$$

In which,

$$M = \varepsilon G \frac{S_0}{1-K_{eff}} = \varepsilon G1G2 \frac{S_0}{1-K_{eff}} \; ;$$

Ma denotes the response value of the first neutron detector, Mb denotes the response value of the second neutron detector, $\varepsilon$ denotes a neutron detection efficiency, $S_0$ denotes an intensity of an external neutron source, and $K_{effa}$ denotes the effective value-added coefficient in the initial state, $K_{effb}$ denotes the effective value-added coefficient in the sub-critical state, G1 denotes a spatial correction factor, and G2 denotes a detector response correction factor.

In one of the embodiments, the aforementioned control rod worth determination sub-module is specifically configured to calculate the control rod worth according to a formula $\rho = \ln \dfrac{K_{effb}}{K_{effa}}$ ; where $\rho$ is the control rod worth.

In one of the embodiments, the spatial correction factor is a relational expression including a normalized external neutron source distribution function, a conjugate function, a neutron density distribution function, a reactor neutron generation operator, and a neutron velocity. The detector response correction factor is a relational expression including a weight coefficient, the neutron density distribution function, and the neutron velocity.

In one of the embodiments, the spatial correction factor is: $G1 = \dfrac{<\psi, \; \xi>}{<\psi, \; Fv\varphi>}$ and the detector response correction factor is: G2 =< w, v$\varphi$ >. In which, $\xi$ denotes the normalized external neutron source distribution function, $\Psi$ denotes the conjugate function, $\varphi$ denotes the neutron density distribution function, F denotes the reactor neutron generation operator, and v denotes the neutron velocity; w denotes the weight coefficient, and <> represents the integral of space energy.

In one of the embodiments, before the second neutron detector response value acquisition module, the device also includes a control rod position change module. The control rod position change module is configured to change a relative position between a control rod and a core of the nuclear reactor to achieve the sub-critical state.

In one of the embodiments, the control rod position change module is specifically configured to control the control rod to drop into the core; or alternatively, to be lifted to a top of the core. In which, the control rod includes at least one of a safety control rod, a power control rod, and a temperature control rod.

For the specific limitation of the device for measuring the control rod worth in the nuclear power plant under the sub-critical state, please refer to the above limitation on the method for measuring the control rod worth in the nuclear power plant under the sub-critical state, which will not be repeated here. Each module in the device for measuring the control rod worth in the nuclear power plant under the sub-critical state can be implemented in whole or in part by software, hardware and a combination thereof. The above-mentioned modules may be embedded in the form of hardware or independent of the processor in the computer equipment, or may be stored in the memory of the computer equipment in the form of software, so that the processor can call and execute the operations corresponding to the above-mentioned modules.

In accordance with an embodiment, it is provided a computer device, which includes a memory and a processor. A computer program is stored in the memory, and the processor, when executing the computer program, is configured to implement the following steps of acquiring a response value of a first neutron detector of a nuclear reactor in an initial state; acquiring a response value of a second neutron detector of the nuclear reactor in the sub-critical state; and determining the control rod worth according to the response value of the first neutron detector and the response value of the second neutron detector.

In an embodiment, the processor, when executing the computer program, is also configured to implement the following steps of determining an effective value-added coefficient in the initial state; acquiring an effective value-added coefficient in the sub-critical state according to the response value of the first neutron detector, the response value of the second neutron detector and the effective value-added coefficient in the initial state; and determining the control rod worth according to the effective value-added coefficient in the initial state and the effective value-added coefficient in the sub-critical state.

In an embodiment, the processor, when executing the computer program, is also configured to implement the following step of calculating the effective value-added coefficient in the sub-critical state according to the formula

$$\frac{Mb}{Ma} = \frac{Gb}{Ga}\frac{1 - K_{effb}}{1 - K_{effa}} \; ;$$

In which,

$$M = \varepsilon G \frac{S_0}{1 - K_{eff}} = \varepsilon G1G2 \frac{S_0}{1 - K_{eff}} \; ;$$

Ma denotes the response value of the first neutron detector, Mb denotes the response value of the second neutron detector, $\varepsilon$ denotes the neutron detection efficiency, $S_0$ denotes the intensity of an external neutron source, and $K_{effa}$ denotes the effective value-added coefficient in the initial state, $K_{effb}$ denotes the effective value-added coefficient in the sub-critical state, G1 denotes the spatial correction factor, and G2 denotes the detector response correction factor.

In an embodiment, the processor, when executing the computer program, is also configured to implement the following step of calculating the control rod worth according to a formula $\rho = \ln\dfrac{K_{effb}}{K_{effa}}$ ; where $\rho$ is the control rod worth.

In an embodiment, the spatial correction factor is a relational expression including a normalized external neutron source distribution function, a conjugate function, a neutron density distribution function, a reactor neutron generation operator, and a neutron velocity. The detector response correction factor is a relational expression including a weight coefficient, the neutron density distribution function, and the neutron velocity.

In an embodiment, the spatial correction factor is: $G1 = \dfrac{<\psi,\ \xi>}{<\psi,\ Fv\varphi>}$ and the detector response correction factor is: G2 =< w, v$\varphi$ >. In which, $\xi$ denotes the normalized external neutron source distribution function, $\Psi$ denotes the conjugate function, $\varphi$ denotes the neutron density distribution function, F denotes the reactor neutron generation operator, and v denotes the neutron velocity; w denotes the weight coefficient, and <> represents the integral of space energy.

In an embodiment, the processor, when executing the computer program, is also configured to implement the following step of changing a relative position between a control rod and a core of the nuclear reactor to achieve the sub-critical state.

In an embodiment, the processor, when executing the computer program, is also configured to implement the following step of controlling the control rod to drop into the core; or alternatively to be lifted to a top of the core. In which, the control rod includes at least one of a safety control rod, a power control rod, and a temperature control rod.

In accordance with an embodiment, it is provided a computer-readable storage medium, on which a computer program is stored, and when the computer program is executed by a processor, the following steps are implemented: acquiring a response value of a first neutron detector of a nuclear reactor in an initial state; acquiring a response value of a second neutron detector of the nuclear reactor in the sub-critical state; and determining the control rod worth according to the response value of the first neutron detector and the response value of the second neutron detector.

In an embodiment, when the computer program is executed by a processor, the following steps are also implemented: determining an effective value-added coefficient in the initial state; acquiring an effective value-added coefficient in the sub-critical state according to the response value of the first neutron detector, the response value of the second neutron detector and the effective value-added coefficient in the initial state; and determining the control rod worth according to the effective value-added coefficient in the initial state and the effective value-added coefficient in the sub-critical state.

In an embodiment, when the computer program is executed by a processor, the following step of calculating the effective value-added coefficient in the sub-critical state according to the formula $\dfrac{Mb}{Ma} = \dfrac{Gb}{Ga}\dfrac{1 - K_{effb}}{1 - K_{effa}}$, may also be implemented;

In which,

$$M = \varepsilon G \frac{S_0}{1 - K_{eff}} = \varepsilon G1 G2 \frac{S_0}{1 - K_{eff}} ;$$

Ma denotes the response value of the first neutron detector, Mb denotes the response value of the second neutron detector, $\varepsilon$ denotes the neutron detection efficiency, $S_0$ denotes the intensity of an external neutron source, and $K_{effa}$ denotes the effective value-added coefficient in the initial state, $K_{effb}$ denotes the effective value-added coefficient in the sub-critical state, G1 denotes the spatial correction factor, and G2 denotes the detector response correction factor.

In an embodiment, when the computer program is executed by a processor, the following step of calculating the control rod worth according to a formula $\rho = \ln\dfrac{K_{effb}}{K_{effa}}$ may also be implemented; where $\rho$ is the control rod worth.

In an embodiment, the spatial correction factor is a relational expression including a normalized external neutron source distribution function, a conjugate function, a neutron density distribution function, a reactor neutron generation operator, and a neutron velocity. The detector response correction factor is a relational expression including a weight coefficient, the neutron density distribution function, and the neutron velocity.

In an embodiment, the spatial correction factor is: $G1 = \dfrac{<\psi,\ \xi>}{<\psi,\ Fv\varphi>}$ and the detector response correction factor is: G2 =< w, v$\varphi$ >. In which, $\xi$ denotes the normalized external neutron source distribution function, $\Psi$ denotes the conjugate function, $\varphi$ denotes the neutron density distribution function, F denotes the reactor neutron generation operator, and v denotes the neutron velocity; w denotes the weight coefficient, and <> represents the integral of space energy.

In an embodiment, when the computer program is executed by a processor, the following step of changing a relative position between a control rod and a core of the nuclear reactor to achieve the sub-critical state may also be implemented.

In an embodiment, when the computer program is executed by a processor, the following step of controlling the control rod to drop into the core; or alternatively, to be lifted to a top of the core may also be implemented. In which, the control rod includes at least one of a safety control rod, a power control rod, and a temperature control rod.

Those of ordinary skill in the art can understand that all or part of the processes in the above-mentioned embodiment methods can be implemented by instructing relevant hardware through a computer program. The computer program can be stored in a non-volatile computer readable storage. In the medium, when the computer program is executed, it may include the processes of the above-mentioned method embodiments. Among them, any reference to memory, storage, database or other media used in the embodiments of the present application may include non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external cache memory. As an illustration rather than a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synch link DRAM (SLDRAM), memory bus (Rambus) direct RAM (RDRAM), direct memory bus dynamic RAM (DRDRAM), and memory bus dynamic RAM (RDRAM), etc.

The above description are merely optional embodiments of the present application, and are not used to limit the present application.

**Claims**

1. A method for measuring control rod worth in a nuclear power plant under a sub-critical state, comprising:

   acquiring a response value of a first neutron detector of a nuclear reactor in an initial state;
   acquiring a response value of a second neutron detector of the nuclear reactor in the sub-critical state; and
   determining the control rod worth according to the response value of the first neutron detector and the response value of the second neutron detector,
   **characterized in**
   **that** the determining the control rod worth according to the response value of the first neutron detector and the response value of the second neutron detector comprises:

   measuring a boron concentration of a primary loop in the initial state, and determining an effective value-added coefficient in the initial state according to the boron concentration of the primary loop;
   acquiring an effective value-added coefficient in the sub-critical state according to the response value of the first neutron detector, the response value of the second neutron detector, and the effective value-added coefficient in the initial state; and
   determining the control rod worth according to the effective value-added coefficient in the initial state and the effective value-added coefficient in the sub-critical state.

2. The method according to claim 1, wherein the acquiring an effective value-added coefficient in the sub-critical state according to the response value of the first neutron detector, the response value of the second neutron detector, and the effective value-added coefficient in the initial state are comprises:

   calculating the effective value-added coefficient in the sub-critical state according to a formula $\dfrac{Mb}{Ma} = \dfrac{Gb}{Ga}\dfrac{1 - K_{effb}}{1 - K_{effa}}$ ;

   wherein $M = \varepsilon G \dfrac{S_0}{1 - K_{eff}} = \varepsilon G1G2 \dfrac{S_0}{1 - K_{eff}}$ , Ma denotes the response value of the first neutron detector, Mb denotes the response value of the second neutron detector, $\varepsilon$ denotes a neutron detection efficiency, $S_0$ denotes an intensity of an external neutron source, and $K_{effa}$ denotes the effective value-added coefficient in the initial state, $K_{effb}$ denotes the effective value-added coefficient in the sub-critical state, G1 is a spatial correction factor, and G2 is a detector response correction factor.

3. The method according to claim 2, wherein the determining the control rod worth according to the effective value-added coefficient in the initial state and the effective value-added coefficient in the sub-critical state comprises:

   calculating the control rod worth according to a formula $\rho = \ln \dfrac{K_{effb}}{K_{effa}}$ ;

   wherein $\rho$ is the control rod worth.

4. The method according to claim 2, wherein the spatial correction factor is a relational expression including a normalized external neutron source distribution function, a conjugate function, a neutron density distribution function, a reactor neutron generation operator, and a neutron velocity; and
   the detector response correction factor is a relational expression including a weight coefficient, the neutron density distribution function, and the neutron velocity.

5. The method according to claim 4, wherein the spatial correction factor is:

   $G1 = \dfrac{<\psi,\ \xi>}{<\psi,\ Fv\varphi>}$ , and the detector response correction factor is: G2 =< w, v$\varphi$ >;

   wherein $\xi$ denotes the normalized external neutron source distribution function, $\Psi$ denotes the conjugate function, $\varphi$ denotes the neutron density distribution function, F denotes the reactor neutron generation operator, and v denotes the neutron velocity; w denotes the weight coefficient, and <> represents an integral of space energy.

6. The method according to any of the preceding claims, wherein before the response value of the second neutron detector of the nuclear reactor in the sub-critical state is acquired, further comprising:
changing a relative position between a control rod and a core of the nuclear reactor to achieve the sub-critical state.

7. The method according to claim 6, wherein the changing a relative position between a control rod and a core of the nuclear reactor comprises:

controlling the control rod to drop into the core; or
alternatively, controlling the control rod to be lifted to a top of the core;
wherein the control rod comprises at least one of a safety control rod, a power control rod, and a temperature control rod.

8. A device for measuring control rod worth in a nuclear power plant under a sub-critical state, comprising:

a first neutron detector response value acquisition module, capable of acquiring a response value of a first neutron detector of a nuclear reactor in an initial state;
a second neutron detector response value acquisition module, capable of acquiring a response value of a second neutron detector of the nuclear reactor in the sub-critical state; and
a control rod worth determination module, configured to determine the control rod worth according to the response value of the first neutron detector and the response value of the second neutron detector.
**characterized in**
**that** the control rod worth determination module (403) comprises:

a first effective value-added coefficient sub-module, configured to measure a boron concentration of a primary loop in the initial state, and determine an effective value-added coefficient in the initial state according to the boron concentration of the primary loop;
a second effective value-added coefficient sub-module, configured to acquire an effective value-added coefficient in the sub-critical state according to the response value of the first neutron detector, the response value of the second neutron detector and the effective value-added coefficient in the initial state; and
a control rod worth determination sub-module, configured to determine the control rod worth according to the effective value-added coefficient in the initial state and the effective value-added coefficient in the sub-critical state.

9. The device according to claim 8, wherein the second effective value-added coefficient sub-module is configured to calculate the effective value-added coefficient in the sub-critical state according to a formula $\dfrac{Mb}{Ma} = \dfrac{Gb}{Ga}\dfrac{1 - K_{effb}}{1 - K_{effa}}$ ;

wherein, $M = \varepsilon G \dfrac{S_0}{1 - K_{eff}} = \varepsilon G1G2 \dfrac{S_0}{1 - K_{eff}}$ ;

Ma denotes the response value of the first neutron detector, Mb denotes the response value of the second neutron detector, $\varepsilon$ denotes a neutron detection efficiency, $S_0$ denotes an intensity of an external neutron source, and $K_{effa}$ denotes the effective value-added coefficient in the initial state, $K_{effb}$ denotes the effective value-added coefficient in the sub-critical state, G1 is a spatial correction factor, and G2 is a detector response correction factor.

10. The device according to claim 8, wherein the control rod worth determination sub-module is configured to calculate the control rod worth according to a formula $\rho = \ln \dfrac{K_{effb}}{K_{effa}}$ , wherein $\rho$ is the control rod worth.

11. The device according to any of claims 8 to 10, the device further comprises:
a control rod position change module, configured to change a relative position between a control rod and a core of the nuclear reactor to achieve the sub-critical state before the response value of the second neutron detector of the nuclear reactor in the sub-critical state is acquired.

**12.** The device according to claim 11, wherein the control rod position change module is configured to control the control rod to drop into the core; or alternatively, to be lift to a top of the core.

**13.** A computer device, comprising a memory and a processor, the memory storing a computer program, wherein the processor, when executing the computer program, is configured to implement the steps of the method according to any one of claims 1 to 7.

**14.** A computer-readable storage medium, on which a computer program is stored, wherein the computer program, when executed by a processor, causes the steps of the method according to any one of claims 1 to 7 to be implemented.

**Patentansprüche**

**1.** Ein Verfahren zur Messung des Regelstabwerts in einem Kernkraftwerk im unterkritischen Zustand, das Folgendes umfasst:

das Erfassen eines Ansprechwerts eines ersten Neutronendetektors eines Kernreaktors in einem Anfangszustand;
das Erfassen eines Ansprechwerts eines zweiten Neutronendetektors des Kernreaktors im unterkritischen Zustand; und
das Bestimmen des Regelstabwerts anhand des Ansprechwerts des ersten Neutronendetektors und des Ansprechwerts des zweiten Neutronendetektors,
**dadurch gekennzeichnet, dass**
das Bestimmen des Regelstabwerts anhand des Ansprechwerts des ersten Neutronendetektors und des Ansprechwerts des zweiten Neutronendetektors Folgendes umfasst:
das Messen einer Borkonzentration eines Primärkreislaufs im Anfangszustand und das Bestimmen eines effektiven Wertzuwachskoeffizienten im Anfangszustand entsprechend der Borkonzentration des Primärkreislaufs;
das Ermitteln eines effektiven Wertzuwachskoeffizienten im unterkritischen Zustand anhand des Ansprechwerts des ersten Neutronendetektors, des Ansprechwerts des zweiten Neutronendetektors und des effektiven Wertzuwachskoeffizienten im Ausgangszustand; und
das Bestimmen des Regelstabwerts anhand des effektiven Wertzuwachskoeffizienten im Ausgangszustand und des effektiven Wertzuwachskoeffizienten im unterkritischen Zustand.

**2.** Das Verfahren nach Anspruch 1, wobei das Ermitteln eines effektiven Wertzuwachskoeffizienten im unterkritischen Zustand anhand des Ansprechwerts des ersten Neutronendetektors, des Ansprechwerts des zweiten Neutronendetektors und des effektiven Wertzuwachskoeffizienten im Anfangszustand Folgendes umfasst:
das Berechnen des effektiven Wertzuwachskoeffizienten im unterkritischen Zustand gemäß der Formel

$$\frac{Mb}{Ma} = \frac{Gb}{Ga}\frac{1-K_{effb}}{1-K_{effa}}$$ wobei $M = \varepsilon G \frac{S_0}{1-K_{eff}} = \varepsilon G1G2 \frac{S_0}{1-K_{eff}}$ , Ma den Antwortwert des ersten Neutronendetektors bezeichnet, Mb den Antwortwert des zweiten Neutronendetektors, $\varepsilon$ die Neutronendetektionseffizienz, S0 die Intensität einer externen Neutronenquelle, Keffa den effektiven Wertzuwachskoeffizienten im Anfangszustand, Keffb den effektiven Wertzuwachskoeffizienten im unterkritischen Zustand, G1 ein räumlicher Korrekturfaktor ist und G2 ein Korrekturfaktor für die Detektorempfindlichkeit.

**3.** Das Verfahren nach Anspruch 2, wobei das Bestimmen des Regelstabwerts anhand des effektiven Wertzuwachskoeffizienten im Anfangszustand und des effektiven Wertzuwachskoeffizienten im unterkritischen Zustand Folgendes umfasst:

die Berechnung des Regelstabwerts gemäß der Formel $\rho = \ln \frac{K_{effb}}{K_{effa}}$ wobei $\rho$ den Regelstabwert bezeichnet.

**4.** Das Verfahren nach Anspruch 2, wobei der räumliche Korrekturfaktor ein relationaler Ausdruck ist, der eine normierte externe Neutronenquellen-Verteilungsfunktion, eine konjugierte Funktion, eine Neutronendichte-Verteilungsfunktion, einen Reaktorneutronen-Erzeugungsoperator und eine Neutronengeschwindigkeit umfasst; und
der Korrekturfaktor für die Detektorantwort ein relationaler Ausdruck ist, der einen Gewichtungskoeffizienten, die Neutronendichte-Verteilungsfunktion und die Neutronengeschwindigkeit umfasst.

**5.** Das Verfahren nach Anspruch 4, wobei der räumliche Korrekturfaktor lautet:

$$G1 = \frac{<\psi, \; \xi>}{<\psi, \; Fv\varphi>}$$

, und der Korrekturfaktor für die Detektorempfindlichkeit lautet: G2=<w, vφ>;
wobei ξ die normierte Verteilungsfunktion der externen Neutronenquelle bezeichnet, ψ die konjugierte Funktion, φ die Neutronendichte-Verteilungsfunktion, F den Reaktorneutronen-Erzeugungsoperator, v die Neutronengeschwindigkeit, w den Gewichtungskoeffizienten, und <> ein Integral der Raumenergie darstellt.

**6.** Das Verfahren nach einem der vorstehenden Ansprüche, das vor der Erfassung des Ansprechwerts des zweiten Neutronendetektors des Kernreaktors im unterkritischen Zustand zusätzlich Folgendes umfasst:
das Verändern einer relativen Position zwischen einem Regelstab und dem Kern eines Kernreaktors, um den unterkritischen Zustand zu erreichen.

**7.** Das Verfahren nach Anspruch 6, wobei das Ändern der relativen Position zwischen einem Regelstab und dem Kern eines Kernreaktors Folgendes umfasst:

das Einfahren des Regelstabs in den Kern; oder
alternativ das Anheben des Regelstabs bis zur Oberseite des Kerns;
wobei der Regelstab mindestens eine der folgenden Komponenten umfasst: einen Sicherheitsregelstab, einen Leistungsregelstab und einen Temperaturregelstab.

**8.** Eine Vorrichtung zur Messung des Regelstabwerts in einem Kernkraftwerk im unterkritischen Zustand, die Folgendes umfasst:

ein Modul zur Erfassung des Ansprechwerts eines ersten Neutronendetektors, das in der Lage ist, einen Ansprechwert eines ersten Neutronendetektors eines Kernreaktors in einem Anfangszustand zu erfassen;
ein Modul zur Erfassung des Ansprechwerts eines zweiten Neutronendetektors, das in der Lage ist, einen Ansprechwert eines zweiten Neutronendetektors des Kernreaktors im unterkritischen Zustand zu erfassen; und
ein Modul zur Bestimmung des Regelstabwerts, das so konfiguriert ist, dass es den Regelstabwert anhand des Ansprechwerts des ersten Neutronendetektors und des Ansprechwerts des zweiten Neutronendetektors bestimmt,
**dadurch gekennzeichnet, dass**
das Modul zur Bestimmung des Regelstabwerts (403) Folgendes umfasst:
ein erstes Untermodul für den effektiven Wertzuwachskoeffizienten, das so ausgelegt ist, dass es eine Borkonzentration eines Primärkreislaufs im Anfangszustand misst und einen effektiven Wertzuwachskoeffizienten im Anfangszustand entsprechend der Borkonzentration des Primärkreislaufs bestimmt;
ein zweites Untermodul für den effektiven Wertzuwachskoeffizienten, das so ausgelegt ist, dass es einen effektiven Wertzuwachskoeffizienten im unterkritischen Zustand anhand des Ansprechwerts des ersten Neutronendetektors, des Ansprechwerts des zweiten Neutronendetektors und des effektiven Wertzuwachskoeffizienten im Anfangszustand ermittelt; und
ein Untermodul zur Bestimmung des Regelstabwerts, das so ausgelegt ist, dass es den Regelstabwert anhand des effektiven Wertzuwachskoeffizienten im Anfangszustand und des effektiven Wertzuwachskoeffizienten im unterkritischen Zustand bestimmt.

**9.** Die Vorrichtung nach Anspruch 8, wobei das zweite Untermodul für den effektiven Wertzuwachskoeffizienten so ausgelegt ist, dass es den effektiven Wertzuwachskoeffizienten im unterkritischen Zustand gemäß der Formel $\frac{Mb}{Ma} = \frac{Gb}{Ga}\frac{1-K_{effa}}{1-K_{effb}}$ berechnet; wobei $M = \varepsilon G \frac{S_0}{1-K_{eff}} = \varepsilon G1G2 \frac{S_0}{1-K_{eff}}$, Ma den Messwert des ersten Neutronendetektors bezeichnet, Mb den Messwert des zweiten Neutronendetektors, ε die Neutronendetektionseffizienz, $S_0$ die Intensität einer externen Neutronenquelle, $K_{effa}$ den effektiven Wertzuwachskoeffizienten im Anfangszustand, $K_{effb}$ den effektiven Wertzuwachskoeffizienten im unterkritischen Zustand, G1 ein räumlicher Korrekturfaktor ist und G2 ein Korrekturfaktor für die Detektorempfindlichkeit.

**10.** Die Vorrichtung nach Anspruch 8, wobei das Untermodul zur Bestimmung des Regelstabwerts so ausgelegt ist, dass es den Regelstabwert gemäß der folgenden Formel berechnet: $\rho = \ln\frac{K_{effb}}{K_{effa}}$ , wobei $\rho$ der Regelstabwert ist.

11. Die Vorrichtung nach einem der Ansprüche 8 bis 10, wobei die Vorrichtung ferner Folgendes umfasst:
ein Modul zur Änderung der Regelstabposition, das so ausgelegt ist, dass es eine relative Position zwischen einem Regelstab und dem Kern eines Kernreaktors ändert, um den unterkritischen Zustand zu erreichen, bevor der Ansprechwert des zweiten Neutronendetektors des Kernreaktors im unterkritischen Zustand erfasst wird.

12. Die Vorrichtung nach Anspruch 11, wobei das Modul zur Änderung der Regelstabposition so ausgelegt ist, dass es den Regelstab so steuert, dass er in den Kern absinkt; oder alternativ, dass er an die Oberseite des Kerns angehoben wird.

13. Eine Computervorrichtung, die einen Speicher und einen Prozessor umfasst, wobei der Speicher ein Computerprogramm speichert und der Prozessor bei der Ausführung des Computerprogramms so ausgelegt ist, dass er die Schritte des Verfahrens gemäß einem der Ansprüche 1 bis 7 ausführt.

14. Ein computerlesbares Speichermedium, auf dem ein Computerprogramm gespeichert ist, wobei das Computerprogramm bei Ausführung durch einen Prozessor bewirkt, dass die Schritte des Verfahrens gemäß einem der Ansprüche 1 bis 7 ausgeführt werden.

**Revendications**

1. Procédé de mesure d'efficacité de barre de commande dans une centrale nucléaire à un état sous-critique, comprenant les étapes consistant à :

acquérir une valeur de réponse d'un premier détecteur de neutrons d'un réacteur nucléaire dans un état initial ;
acquérir une valeur de réponse d'un second détecteur de neutrons du réacteur nucléaire dans l'état sous-critique ; et
déterminer l'efficacité de barre de commande selon la valeur de réponse du premier détecteur de neutrons et la valeur de réponse du second détecteur de neutrons,
**caractérisé en ce**
**que** le fait de déterminer l'efficacité de barre de commande selon la valeur de réponse du premier détecteur de neutrons et la valeur de réponse du second détecteur de neutrons comprend :
le fait de mesurer une concentration en bore d'une boucle primaire dans l'état initial, et de déterminer un facteur de multiplication effectif dans l'état initial selon la concentration en bore de la boucle primaire ;
le fait d'acquérir un facteur de multiplication effectif dans l'état sous-critique selon la valeur de réponse du premier détecteur de neutrons, la valeur de réponse du second détecteur de neutrons, et le facteur de multiplication effectif dans l'état initial ; et
le fait de déterminer l'efficacité de barre de commande selon le facteur de multiplication effectif dans l'état initial et le facteur de multiplication effectif dans l'état sous-critique.

2. Procédé selon la revendication 1, dans lequel le fait d'acquérir un facteur de multiplication effectif dans l'état sous-critique selon la valeur de réponse du premier détecteur de neutrons, la valeur de réponse du second détecteur de neutrons, et le facteur de multiplication effectif dans l'état initial comprend :

le fait de calculer le facteur de multiplication effectif dans l'état sous-critique selon une formule $\dfrac{Mb}{Ma} = \dfrac{Gb}{Ga}\dfrac{1-K_{effb}}{1-K_{effa}}$ ;

où $M = \varepsilon G\dfrac{S_0}{1-K_{eff}} = \varepsilon G1G2\dfrac{S_0}{1-K_{eff}}$ , Ma désigne la valeur de réponse du premier détecteur de neutrons, Mb désigne la valeur de réponse du second détecteur de neutrons, $\varepsilon$ désigne une efficacité de détection de neutrons, $S_0$ désigne une intensité d'une source de neutrons externe, et $K_{effa}$ désigne le facteur de multiplication effectif dans l'état initial, $K_{effb}$ désigne le facteur de multiplication effectif dans l'état sous-critique, G1 est un facteur de correction spatiale, et G2 est un facteur de correction de réponse de détecteur.

3. Procédé selon la revendication 2, dans lequel le fait de déterminer l'efficacité de barre de commande selon le facteur de multiplication effectif dans l'état initial et le facteur de multiplication effectif dans l'état sous-critique comprend :

le fait de calculer l'efficacité de barre de commande selon une formule : $\rho = \ln \dfrac{K_{effb}}{K_{effa}}$ ;

où $\rho$ est l'efficacité de barre de commande.

4. Procédé selon la revendication 2, dans lequel le facteur de correction spatiale est une expression relationnelle incluant une fonction de distribution normalisée de source de neutrons externe, une fonction conjuguée, une fonction de distribution de densité de neutrons, un opérateur de génération de neutrons de réacteur, et une vitesse de neutrons ; et
le facteur de correction de réponse de détecteur est une expression relationnelle incluant un coefficient de pondération, la fonction de distribution de densité de neutrons, et la vitesse de neutrons.

5. Procédé selon la revendication 4, dans lequel le facteur de correction spatiale est :

$$G1 = \frac{<\psi, \; \xi>}{<\psi, \; Fv\varphi>}$$ , et le facteur de correction de réponse de détecteur est : $G2 = <w, v\varphi>$ ; où $\xi$ désigne la fonction de distribution normalisée de source de neutrons externe, $\psi$ désigne la fonction conjuguée, $\varphi$ désigne la fonction de distribution de densité de neutrons, F désigne l'opérateur de génération de neutrons de réacteur, et $v$ désigne la vitesse de neutrons ; w désigne le coefficient de pondération, et <> représente une intégrale de l'énergie d'espace.

6. Procédé selon l'une quelconque des revendications précédentes, comprenant en outre avant que la valeur de réponse du second détecteur de neutrons du réacteur nucléaire dans l'état sous-critique ne soit acquise :
le fait de changer une position relative entre une barre de commande et un cœur du réacteur nucléaire pour atteindre l'état sous-critique.

7. Procédé selon la revendication 6, dans lequel le fait de changer une position relative entre une barre de commande et un cœur du réacteur nucléaire comprend :

le fait de commander la barre de commande pour la descendre dans le cœur ; ou
en variante, le fait de commander la barre de commande pour la remonter jusqu'à un sommet du cœur ;
où la barre de commande comprend au moins l'une d'une barre de commande de sécurité, d'une barre de commande de puissance, et d'une barre de commande de température.

8. Dispositif de mesure d'efficacité de barre de commande dans une centrale nucléaire à un état sous-critique, comprenant :

un module d'acquisition de valeur de réponse de premier détecteur de neutrons, permettant d'acquérir une valeur de réponse d'un premier détecteur de neutrons d'un réacteur nucléaire dans un état initial ;
un module d'acquisition de valeur de réponse de second détecteur de neutrons, permettant d'acquérir une valeur de réponse d'un second détecteur de neutrons du réacteur nucléaire dans l'état sous-critique ; et
un module de détermination d'efficacité de barre de commande, configuré pour déterminer l'efficacité de barre de commande selon la valeur de réponse du premier détecteur de neutrons et la valeur de réponse du second détecteur de neutrons,
**caractérisé en ce**
**que** le module de détermination d'efficacité de barre de commande (403) comprend :

un premier sous-module de facteur de multiplication effectif, configuré pour mesurer une concentration en bore d'une boucle primaire dans l'état initial, et déterminer un facteur de multiplication effectif dans l'état initial selon la concentration en bore de la boucle primaire ;
un second sous-module de facteur de multiplication effectif, configuré pour acquérir un facteur de multiplication effectif dans l'état sous-critique selon la valeur de réponse du premier détecteur de neutrons, la valeur de réponse du second détecteur de neutrons et le facteur de multiplication effectif dans l'état initial ; et
un sous-module de détermination d'efficacité de barre de commande, configuré pour déterminer l'efficacité de barre de commande selon le facteur de multiplication effectif dans l'état initial et le facteur de multiplication effectif dans l'état sous-critique.

9. Dispositif selon la revendication 8, dans lequel le second sous-module de facteur de multiplication effectif est configuré pour calculer le facteur de multiplication effectif dans l'état sous-critique selon une formule

$$\frac{Mb}{Ma} = \frac{Gb}{Ga}\frac{1-K_{effb}}{1-K_{effa}} \; ; \; \text{où} \quad M = \varepsilon G\frac{\dot{S_0}}{1-K_{eff}} = \varepsilon G1G2\frac{S_0}{1-K_{eff}}$$ ; Ma désigne la valeur de réponse du premier détecteur de neutrons, Mb désigne la valeur de réponse du second détecteur de neutrons, $\varepsilon$ désigne une efficacité de détection de neutrons, $S_0$ désigne une intensité d'une source de neutrons externe, et $K_{effa}$ désigne le facteur de multiplication effectif dans l'état initial, $K_{effb}$ désigne le facteur de multiplication effectif dans l'état sous-critique, G1 est un facteur de correction spatiale, et G2 est un facteur de correction de réponse de détecteur.

10. Dispositif selon la revendication 8, dans lequel le sous-module de détermination d'efficacité de barre de commande est configuré pour calculer l'efficacité de barre de commande selon une formule $\rho = \ln\frac{K_{effb}}{K_{effa}}$ , où $\rho$ est l'efficacité de barre de commande.

11. Dispositif selon l'une quelconque des revendications 8 à 10, le dispositif comprenant en outre :
un module de changement de position de barre de commande, configuré pour changer une position relative entre une barre de commande et un cœur du réacteur nucléaire pour atteindre l'état sous-critique avant que la valeur de réponse du second détecteur de neutrons du réacteur nucléaire dans l'état sous-critique ne soit acquise.

12. Dispositif selon la revendication 11, dans lequel le module de changement de position de barre de commande est configuré pour commander la barre de commande pour la descendre dans le cœur ; ou en variante, la remonter jusqu'à un sommet du cœur.

13. Dispositif informatique, comprenant une mémoire et un processeur, la mémoire stockant un programme informatique, où le processeur, lorsqu'il exécute le programme informatique, est configuré pour réaliser les étapes du procédé selon l'une quelconque des revendications 1 à 7.

14. Support de stockage lisible par ordinateur, sur lequel un programme informatique est stocké, où le programme informatique, lorsqu'il est exécuté par le processeur, déclenche la réalisation des étapes du procédé selon l'une quelconque des revendications 1 à 7.

```
        ┌──────────────┐          ╭─101          ╭─102
        │              │                           │
        │  Monitoring  │                    ┌──────────────┐
        │  Device      │                    │              │
        │              │                    │    Server    │
        │              │                    │              │
        └──────────────┘                    └──────────────┘
```

FIG.1

```
  ┌─────────────────────────────────────┐   ╭─201
  │  Acquiring a response value of a     │
  │  first neutron detector of a nuclear │
  │  reactor in an initial state         │
  └─────────────────────────────────────┘
                    │
                    ▼
  ┌─────────────────────────────────────┐   ╭─202
  │  Acquiring a response value of a     │
  │  second neutron detector of the      │
  │  nuclear reactor in the sub-critical │
  │  state                               │
  └─────────────────────────────────────┘
                    │
                    ▼
  ┌─────────────────────────────────────┐   ╭─203
  │  Determining the control rod worth   │
  │  according to the response value of  │
  │  the first neutron detector and the  │
  │  response value of the second        │
  │  neutron detector                    │
  └─────────────────────────────────────┘
```

FIG.2

Determining an effective value-added coefficient
in the initial state — 301

Acquiring an effective value-added coefficient in the sub-
critical state according to the response value of the first neutron
detector, the response value of the second neutron detector, and
the effective value-added coefficient in the initial state — 302

Determining the control rod worth according to the effective
value-added coefficient in the initial state and the effective
value-added coefficient in the sub-critical state — 303

FIG.3

Device for Measuring Control Rod Worth

First Neutron Detector Response Value
Acquisition Module — 401

Second Neutron Detector Response Value
Acquisition Module — 402

Control Rod Worth Determination Module — 403

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 108492898 A